# EUROPEAN PATENT APPLICATION

(11) **EP 2 169 545 A1**
(43) Date of publication of application: **31.03.2010**
(21) Application number: 08165269.5
(22) Date of filing: 26.09.2008
(51) Int. Cl.: G06F 9/445

(54) **Embedded system that automatically updates its software and the method thereof**

(71) Applicant: Moxa Inc., Shing Tien City Taipei Country 231 (TW)
(72) Inventor: Li, Chun Hui, 231, Taipei Country (TW); Chen, Wenshan, 231, Taipei Country (TW)
(74) Representative: Lang, Christian

(57) **Abstract**

An embedded system that automatically updates its software and the method thereof are provided. A boot code in the boot module determines whether the operating system (OS) image file is abnormal. The determination result determines whether the embedded system automatically updates its software. This solves the problem that the user cannot update the software in the embedded system. This helps reducing the manpower and cost for updating software in the conventional embedded system. It also enhances the usage convenience and market competition thereof.

## Description

### BACKGROUND OF THE INVENTION

### Field of Invention

The invention relates to an embedded system and, in particular, to an embedded system that automatically updates its software and the method thereof.

### Related Art

In recent years, embedded systems are very popular. Similar systems, such as web servers and terminal servers, are widely seen. The embedded system usually has an operating system (OS). Common operating systems include Linux, WinCE, and WinXPe. These operating systems have to follow a standard operating procedure before they shut down. If the user does not follow the standard operating procedure to shut down the system (e.g., abnormal power failure or forced power off), the file system of the OS may be damaged so that the system cannot be turned on again. In this case, the user cannot enter the OS to do system maintenance or restoration. In this case, the user has to send the system back to the manufacturer for a repair. This is extremely inconvenient. Moreover, some industries that use the embedded systems as their primary equipment may have a great loss if the systems are down for too long.

Consequently, it is an important issue to enable the user to perform self-maintenance when the embedded system is out of order, without the need to send it back to the manufacturer. This can reduce the cost and time for repairing the embedded system.

### SUMMARY OF THE INVENTION

In view of the foregoing, the invention discloses an embedded system that can automatically update its software and the method thereof. The invention can automatically update the software of the embedded system, thereby preventing the situation that the embedded system cannot operate normally because its internal software is damaged.

The invention provides an embedded system that can automatically update its software. The embedded system is connected with a computer host via a transmission interface. It includes a storage module, a microprocessor, a boot module, a generating module, a transmitting module, and an updating and repairing module. The storage module stores an OS image file. The microprocessor converts the OS image file into an OS code and executes the OS code. The boot module includes a storage unit and a processing unit. The storage unit stores a boot code and a standard checksum. The processing unit executes the boot code. Explicitly, the boot code includes an operating code, a check code, and an initialization code. The operating code calculates a checksum of the OS image file. The check code checks whether the checksum is the same as the standard checksum. The initialization code initializes the microprocessor when the checksum of the OS and the standard checksum are the same. The microprocessor then converts the OS image file into an OS code and executes the OS code.

The generating module generates a request when the checksum of the OS image file and the standard checksum are different. The transmitting module transmits the request to the computer host. The updating and repairing module receives a software update file returned from the computer host according to the request. It further replaces the OS image file with the software update file. The microprocessor converts the updated OS image file into an OS code, and executes the OS code.

The invention provides a method for updating software of an embedded system that is connected with a computer host via a transmission interface. Moreover, the embedded system is stored with an OS image file, a boot code, and a standard checksum. The method starts by running the boot code, which executes the steps of calculating a checksum of the OS image file, and checking whether the checksum is the same as the standard checksum. If the checksum is different from the standard checksum, the method executes the steps of: generating a request; transmitting the request to the computer host; receiving a software update file returned by the computer host according to the request; replacing the OS image file by the software update file; and repeating the above-mentioned steps until the checksum of the OS image file is the same as the standard checksum. Afterwards, the method converts the OS image file into an OS code, and runs the OS code.

The disclosed embedded system and method of updating its software differ from the prior art in that the invention can determine whether the OS image file is damaged using the boot code in the boot module. According to the determination result, the invention decides whether to automatically update software of the embedded system. Using the disclosed techniques, the invention can reduce the manpower and cost for updating software in the embedded system. Therefore, the disclosed embedded system is more convenient in use and more competitive on the market.

### BRIEF DESCRIPTION OF THE DRAWINGS

The invention will become more fully understood from the detailed description given herein below illustration only, and thus is not limitative of the present invention, and wherein:

FIG. 1 is a schematic block diagram of the embedded system that automatically update its software according to an embodiment of the invention; and

FIG. 2 is a flowchart of the method for updating software of an embedded system according to an embodiment of the invention.

### DETAILED DESCRIPTION OF THE INVENTION

The present invention will be apparent from the following detailed description, which proceeds with reference to the accompanying drawings, wherein the same references relate to the same elements.

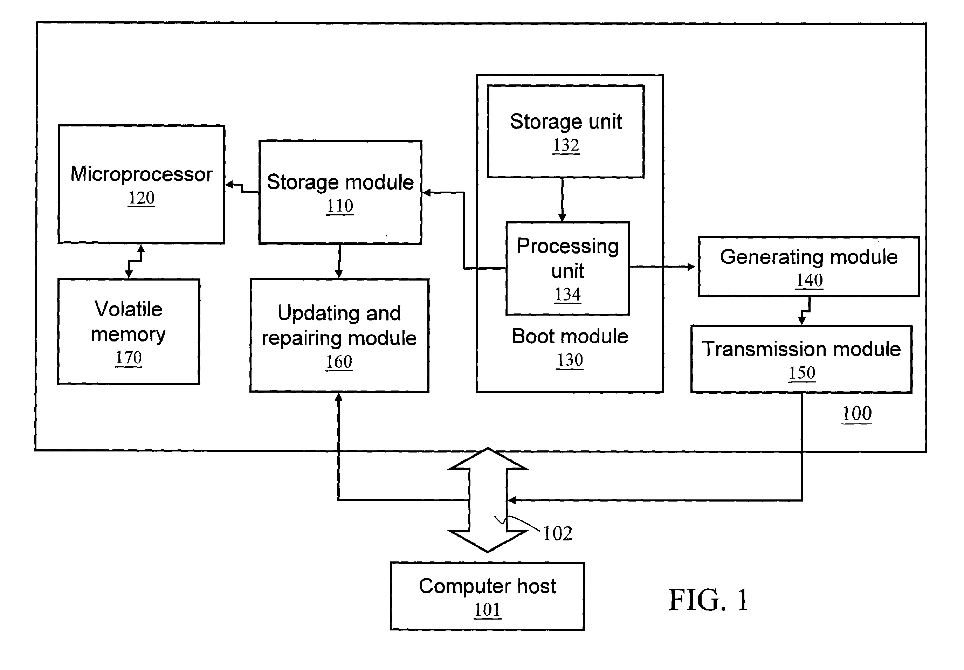

FIG. 1 is a block diagram showing the embedded system that automatically updates its software according to a first embodiment of the invention. As shown in the drawing, the embedded system 100 is preferably connected to a computer host 101 via a transmission interface 102. The transmission interface 102 can be a wired or wireless network. The invention does not have any restriction on this. The transmission interface 102 can even be a serial port or a universal serial bus (USB).

The embedded system 100 includes a storage module 110, a microprocessor 120, a boot module 130, a generating module 140, a transmitting module 150, and an updating and repairing module 160. The storage module 110 stores an operating system (OS) image file. In this embodiment, the storage module 110 is flash memory, but is not limited to this example. Any person skilled in the art should know that the storage module 110 can be some other non-volatile memory.

The microprocessor 120 can be a common central processing unit (CPU) for converting the OS image file stored in the storage module 110 into an OS code and executing the OS code so that the embedded system 100 runs normally. The OS image file can be one of Linux, WinCE, or WinXPe. However, the invention is not limited to these examples.

Besides, the embedded system 100 also includes volatile memory 170, such as the dynamic random access memory (DRAM). The OS code can be temporarily stored in the volatile memory. Since the functions of the volatile memory are well-known to people working in the field, they are not repeated herein.

The boot module 130 includes a storage unit 132 and a processing unit 134. The storage unit 132 stores a boot code and a standard checksum. The boot code includes a check code and an initialization code. More explicitly, the standard checksum is obtained from the contents of a normal OS image file through an algorithm before the embedded system 100 is sold. The check code checks whether the checksum obtained through the same algorithm from the contents of the OS image file is the same as the standard checksum stored in the storage unit 132.

If the checksum obtained through the same algorithm from the contents of the current OS image file is the same as the standard checksum stored in the storage unit 132, it means that the current OS image file can function normally. The initialization code is then executed to initialize the microprocessor 120. The microprocessor 120 thus converts the OS image file into an OS code. The system executes the OS code to start an OS.

On the other hand, if the checksum obtained through the same algorithm from the contents of the current OS image file is different from the standard checksum stored in the storage unit 132, then it means that the current OS image file has a problem and cannot function correctly. In this case, the embedded system 100 generates a request through the generating module 140, and sends the request to the computer host 101 via the transmission module 150. After the computer host 101 receives the request sent from the transmission module 150, it executes an application program according to the request to generate a software update file suitable for the embedded system 100. The software update file is then returned to the embedded system 100.

The updating and repairing module 160 receives the software update file returned from the computer host 101, and updates the OS image file in the storage module 110 accordingly. Afterwards, the microprocessor 120 converts the updated OS image file into the OS code, and executes the OS code for the user to operate the embedded system 100 in this OS.

The following paragraphs explain the disclosed method for updating software of an embedded system in detail so that people skilled in the art can understand the procedure of the method.

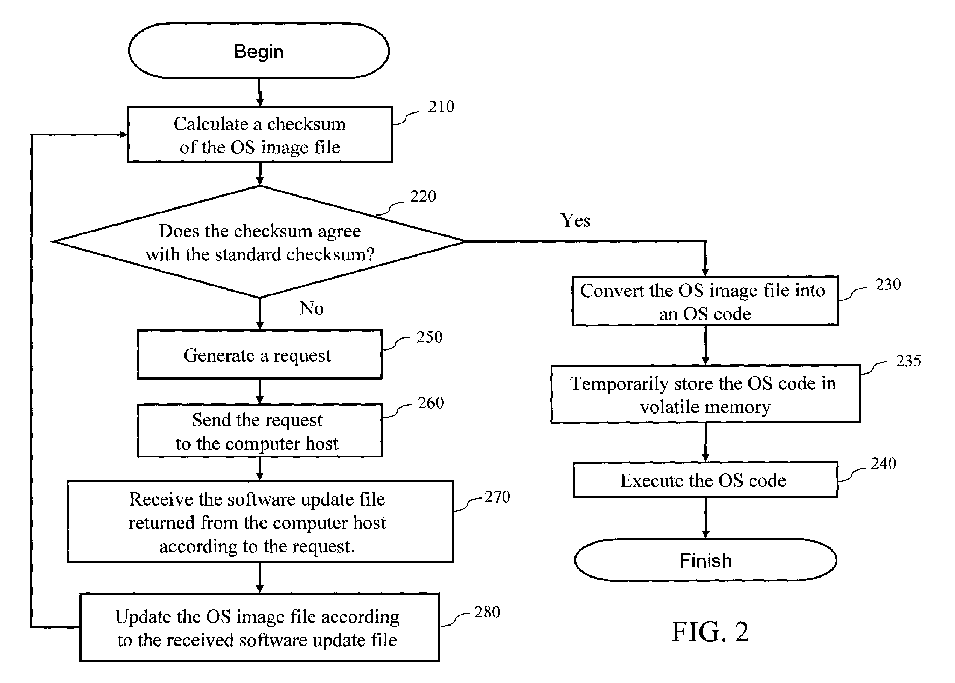

FIG. 2 is a flowchart of the method for updating software of an embedded system according to the first embodiment of the invention. Please simultaneously refer to FIGS. 1 and 2. After the power of the embedded system 100 is turned on, the boot module 130 first executes the operating code in the boot code to calculate the current checksum of the OS image file stored in the storage module 110 (step 210). Afterwards, the check code in the boot code is executed to check whether the checksum calculated in step 210 is the same as the standard checksum stored in the storage unit 132 (step 220).

When the checksum is the same as the standard checksum, the initialization code in the boot code is executed to initialize the microprocessor 120. Afterwards, the microprocessor 120 converts the OS image file into the OS code (step 230), and executes the OS code (step 240). It should be mentioned that after the microprocessor 120 in this embodiment converts the OS image file into the OS code, the OS code is temporarily stored in volatile memory 170 (step 235). Subsequently, the microprocessor 120 reads the OS code from the volatile memory 170 to execute it (step 240).

On the other hand, if the checksum and the standard checksum are not the same, the generating module 140 generates a request (step 250). The transmission module 150 sends the request to the computer host 101 (step 260). After the computer host 101 receives the request sent from the transmission module 150, it executes an application program to generate a software update file for the embedded system 100 and returns the software update file to the embedded system 100. After the updating and repairing module 160 receives the software update file returned from the computer host 101 (step 270), it uses the received software update file to replace the OS image file stored in the storage module 110 (step 280).

A common cause for the embedded system not to boot normally is damage in the OS image file or its storage format (i.e., the file system). In addition to updating or repairing codes or files in the OS image file, the software update file received by the updating and repairing module 160 can also include a storage format repairing file for repairing the storage format of the OS image file. The updating and repairing module 160 can thus use the storage format repairing file to repair the storage format of the OS image file.

Please refer to FIGS. 1 and 2 again. After updating the OS image file in the storage module 110, steps 210 to 220 are repeated to verify that the checksum of the updated OS image file and the standard checksum stored in the storage unit 132 of the boot module 130 are the same. Afterwards, steps 230 to 240 are executed for the user to operate the embedded system 100 in the OS.

In summary, the invention uses the boot code in the boot module to determine whether the OS image file is damaged. The result is used to determine whether to automatically update software of the embedded system. Using the disclosed techniques, the user no longer has the problem of being unable to update software of the embedded system. It reduces the manpower and cost for updating software in the conventional embedded system. Moreover, it enhances the convenience of the embedded system in use and its competition on the market.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An embedded system with the function of automatically updating its software and connected with a computer host via a transmission interface, the embedded system comprising:
a storage module, which stores an operating system (OS) image file;
a microprocessor, which converts the OS image file into an OS code and executes the OS code;
a boot module, which includes:
a storage unit, which stores a boot code and a standard checksum; and
a processing unit, which executes the boot code, wherein the boot code has:
an operating code, which calculates a checksum of the OS image file;
a check code, which checks whether the checksum and the standard checksum agree; and
an initialization code, which initializes the microprocessor when the checksum of the OS image file and the standard checksum agree so that the microprocessor coverts the OS image file into an OS code and executes the OS code;
a generating module, which generates a request when the checksum of the OS image file and the standard checksum do not agree;
a transmitting module, which transmits the request to the computer host; and
a updating and repairing module, which receives a software update file returned from the computer host according to the request and uses the software update file to update the OS image file.

2. The embedded system of claim 1 connected to the computer host via a network or a transmission port.

3. The embedded system of claim 2, wherein the transmission port is a universal serial bus (USB) or a serial port.

4. The embedded system of claim 1, wherein the OS image file is stored in the storage module in a storage format and the software update file further includes a storage format repairing file for the updating and repairing module to use the storage format repairing file to repair the storage format.

5. The embedded system of claim 1 further comprising volatile memory to temporarily hold the OS code.

6. A method for updating software in an embedded system connected with a computer host via a transmission interface and having an OS image file, a boot code, and a standard checksum, the method comprising the steps of:
executing the boot code to perform the steps of:
calculating a checksum of the OS image file;
checking whether the checksum and the standard checksum agree, wherein:
when the checksum and the standard checksum do not agree, further comprising the following steps:
generating a request;
transmitting the request to the computer host;
receiving a software update file returned from the computer host according to the request;
updating the OS image file using the software update file; and
repeating the above-mentioned steps until the checksum and the standard checksum agree; and
when the checksum and the standard checksum agree, further comprising the following steps:
converting the OS image file into an OS code; and
executing the OS code.

7. The method of claim 6, wherein the request is transmitted to the computer host via a network or a transmission port.

8. The method of claim 7, wherein the request is transmitted to the computer host via a USB or serial port.

9. The method of claim 6, wherein the OS image file is stored in the storage module in a storage format and the software update file returned from the computer host according to the computer host includes a storage format repairing file, and the step of updating the OS image file using the software update file includes the step of using the storage format repairing file to repair the storage format.

10. The method of claim 6 further comprising the step of storing the OS code in volatile memory after the step of converting the OS image file into an OS code and before the step of executing the OS code.
